# FASCICULE DE BREVET EUROPEEN

(11) **EP 1 681 220 B1**
(45) Date de publication et mention de la délivrance du brevet: **26.09.2007**
(21) Numéro de dépôt: 05292800.9
(22) Date de dépôt: 27.12.2005
(51) Int. Cl.: B60T 17/18

(54) **Dispositif de protection contre les freinages intempestifs pour un frein à actionneurs électromécaniques**
Einrichtung zum Schützen gegen unerwünschtes Bremsen für elektromechanische Bremsen
Apparatus for protection against inadvertent braking for electromechanical brakes

(30) Priorité: 14.01.2005 FR 0500392
(43) Date de publication de la demande: 19.07.2006
(73) Titulaire: MESSIER-BUGATTI, 78140 Velizy Villacoublay (FR)
(72) Inventeur: Sibre, Jérôme, 75015 Paris (FR)
(74) Mandataire: Parzy, Benjamin Alain

(56) Documents cités:
- FR-A- 764 172
- FR-A- 2 608 975
- FR-A- 2 790 730
- FR-A- 2 857 642
- GB-A- 2 332 931
- US-A1- 2004 239 173

## Description

L'invention concerne un dispositif de protection contre les freinages intempestifs dans un frein à actionneurs électromécaniques

### ARRIERE-PLAN DE L'INVENTION

De tels freins comprennent une pile de disques et un ou plusieurs actionneurs électromécaniques disposés en regard de la pile de disques, lesdits actionneurs comportant un poussoir pour presser la pile de disques. Le poussoir est actionné par un moteur électrique commandé par un module de commande de l'actionneur, qui, en réponse à une consigne de freinage générée par un calculateur de freinage, envoie un ordre de modulation de la puissance à un module ou étage de puissance qui délivre la puissance requise au moteur de l'actionneur.

En cas de défaillance du calculateur de freinage ou du module de commande de l'actionneur, il se peut que le poussoir soit astreint à presser les disques de façon intempestive, ce qui peut se révéler dangereux pour la sécurité du véhicule.

On connaît par exemple du document FR 2 790 730 un système de commande de freins comportant un circuit logique pour commander l'application d'un effort de freinage.

L'état de la technique est également illustré par les documents GB 2 332 931, US 2004/239 173, FR 2 608 975 et FR 764 172.

Le document EP 1 498 332 n'entre dans l'état de la technique qu'au titre de l'article A54(3)CBE.

### OBJET DE L'INVENTION

L'invention a pour objet de proposer une protection améliorée contre les manoeuvres intempestives du poussoir d'un frein électromécanique.

### BREVE DESCRIPTION DE L'INVENTION

En vue de la réalisation de ce but, il est proposé un dispositif de protection contre les freinages intempestifs spécialement adapté à un frein électromécanique comprenant au moins un actionneur ayant un poussoir apte à être déplacé au moyen d'un moteur électrique commandé par un module de commande pour presser de façon commandée une pile de disques. Selon l'invention, le dispositif comporte un interrupteur de puissance disposé sur une ligne de puissance alimentant le moteur électrique de l'actionneur, l'interrupteur de puissance étant commandé par une logique de commande qui place par défaut l'interrupteur de puissance dans un état ouvert et qui ne place l'interrupteur de puissance dans un état fermé qu'en réponse à un signal de confirmation de freinage ne provenant pas du module de commande de l'actionneur et indépendant de celui-ci.

Ainsi, en cas de défaillance du module de commande de l'actionneur, l'actionneur ne peut appliquer d'effort intempestif sur la pile de disques car il est privé de puissance par l'interrupteur.

Il faudrait qu'intervienne une panne double (panne du module de commande et panne de l'organe ayant envoyé le signal de confirmation) pour qu'un freinage intempestif ait lieu, ce qui est très improbable.

### BREVE DESCRIPTION DES DESSINS

L'invention sera mieux comprise à la lumière de la description qui suit en référence aux figures annexées suivantes :
- la figure 1 est un schéma-bloc d'un circuit de freinage d'un aéronef équipé d'un dispositif de protection contre les freinages intempestifs à interrupteur de puissance selon l'invention ;
- la figure 2 est un schéma de la logique de commande de l'interrupteur de puissance.

### DESCRIPTION DETAILLEE DE L'INVENTION

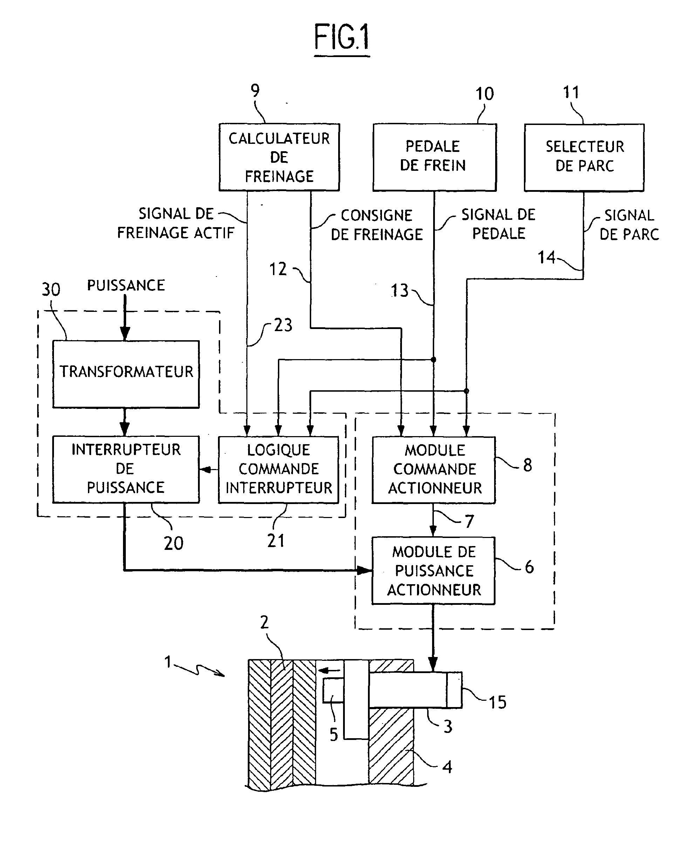

En référence à la figure 1, et de façon connue en soi, un frein électromécanique 1 d'aéronef comporte une pile de disques 2 comportant en alternance des disques solidaires en rotation de la roue à freiner et des disques fixes en rotation.

Le frein 1 comporte une pluralité d'actionneurs 3 (un seul est représenté ici) qui sont portés par une couronne 4 pour s'étendre en regard de la pile de disques 2. Chaque actionneur 3 comporte un poussoir 5 apte à être déplacé vers la pile de disques 2 pour presser celle-ci et ainsi générer un effort de freinage.

Le poussoir 5 est déplacé par un moteur électrique via une chaîne cinématique transformant un mouvement de rotation du moteur électrique en un mouvement de translation du poussoir 5.

Le moteur électrique est alimenté via un module de puissance de l'actionneur 6 qui délivre au moteur une puissance électrique en fonction d'un ordre 7 délivré par un module de commande de l'actionneur 8.

Les ordres délivrés par le module de commande de l'actionneur 8 sont élaborés à partir de divers signaux, venant en particulier d'un calculateur de freinage 9, d'une pédale de frein 10 et d'un sélecteur de parc 11.

L'ensemble du système de freinage de l'aéronef est ici prévu pour fonctionner en trois modes : un mode normal, un mode d'urgence, et un mode de parc.

Dans le mode normal, le module de commande de l'actionneur 8 génère un ordre 7 en fonction d'une consigne de freinage 12 reçue du calculateur de freinage 9.

Dans le mode d'urgence, dans lequel le calculateur de freinage 9 est défaillant, le module de commande de l'actionneur 8 génère un ordre 7 en fonction d'un signal de pédale 13 représentatif de l'enfoncement de la pédale de frein 10 actionnée directement par le pilote.

Dans le mode de parc, prioritaire par rapport aux autres modes, le module de commande de l'actionneur 8 génère un ordre 7 de freinage de parc en réponse à un signal de parc 14 émis lors de l'actionnement du sélecteur de parc 11 par le pilote. Pour permettre un maintien du freinage de parc alors que l'aéronef est à l'arrêt, l'actionneur 3 est équipé d'un frein à manque de courant 15 qui, lorsqu'il n'est pas alimenté, bloque le poussoir 5 en position, en bloquant l'un des arbres de transmission de la chaîne cinématique entre le moteur électrique et le poussoir 5.

Il suffit dès lors de s'assurer que le frein à manque de courant 15 est alimenté, de commander le déplacement du poussoir 5 pour qu'il exerce sur la pile de disques un effort de parc, puis de couper l'alimentation du frein à manque de courant 15 pour bloquer l'actionneur en position de freinage de parc.

L'utilisation d'un frein à manque de courant en tant qu'organe de blocage est particulièrement adaptée car elle permet un maintien de l'effort de parc sans aucune consommation de courant.

Selon l'invention, le dispositif comporte un interrupteur de puissance 20 disposé sur la ligne de puissance, ici en amont du module de puissance de l'actionneur 6. L'interrupteur de puissance 20 est commandé par une logique de commande de l'interrupteur 21 qui place par défaut l'interrupteur 20 dans un état ouvert dans lequel le module de puissance de l'actionneur 6 n'est pas alimenté. Dans cet état, le poussoir 5 de l'actionneur 3 ne peut se déplacer en réponse à un ordre du module de commande de l'actionneur 8.

La logique de commande de l'interrupteur 21 est agencée pour placer l'interrupteur 20 dans un état fermé uniquement en réponse à un signal de confirmation de freinage ne provenant pas du module de commande de l'actionneur 8 et indépendant de celui-ci.

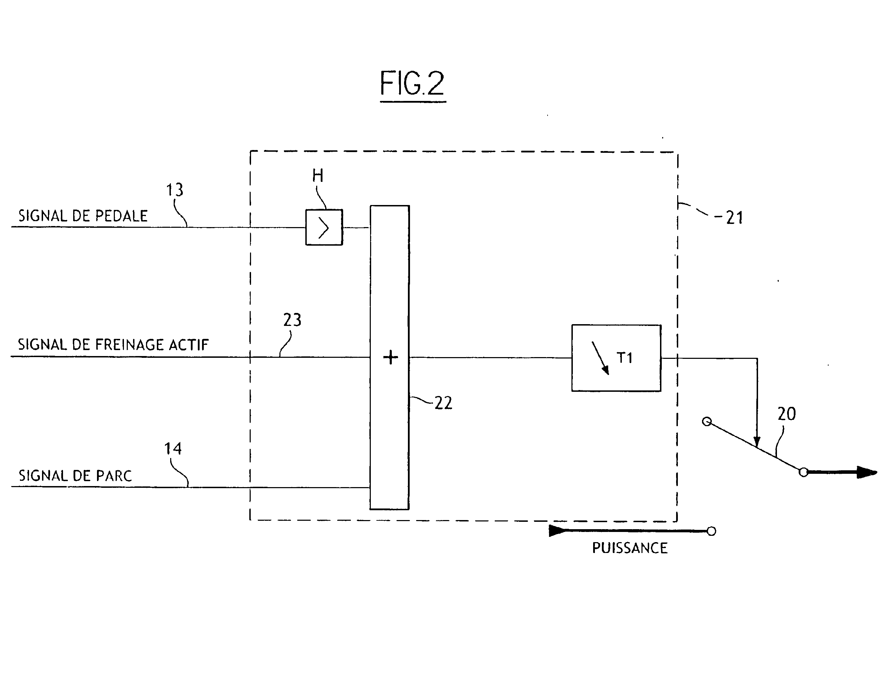

Le signal de confirmation de freinage peut avoir diverses origines, comme cela est maintenant expliqué en référence à la figure 2.

En mode normal, le signal de confirmation est un signal de freinage actif 23 émis par le calculateur de freinage 9, qui indique que le calculateur de freinage est en train d'émettre une consigne de freinage qui impose un déplacement du poussoir 5. Ce signal de freinage actif 23 peut être tout simplement la consigne de freinage 12 elle-même, ou être élaboré à partir de la consigne de freinage.

En mode d'urgence, le calculateur 9 est inactif de sorte que le signal de freinage actif 23 est absent. Le signal de confirmation est alors le signal de pédale 13. Un comparateur H permet de prendre en compte ce signal uniquement s'il dépasse un seuil déterminé, évitant de commuter inutilement l'interrupteur de puissance pour des demandes de freinage faibles.

En mode de parc, le signal de confirmation est le signal de parc 14.

Les signaux 13,14,23 sont tous traités par une porte OU référencée 22. La sortie de la porte OU 22 provoque la commutation de l'interrupteur de puissance 20 de l'état ouvert à l'état fermé, permettant à la puissance d'alimenter l'actionneur 3 via le module de puissance de l'actionneur 6.

La logique comporte une temporisation T1 placée à la sortie de la porte OU 22 et active uniquement sur front descendant. Lorsque celui des signaux de confirmation qui était actif s'annule, la sortie de la porte OU 22 s'annule également, ce qui, en l'absence de la temporisation T1, provoquerait la commutation immédiate de l'interrupteur de puissance 20 vers l'état ouvert. La temporisation T1 permet de laisser le temps au module de commande de l'actionneur 8 de faire revenir le poussoir 5 vers une position de repos avant que la puissance ne soit coupée par l'interrupteur de puissance 20.

De préférence, l'interrupteur de puissance 20 et sa logique de commande 21 sont physiquement séparés du module de commande 8 pour éviter qu'une panne affectant le module de commande 8 n'atteigne l'interrupteur de puissance 20. A cet égard, l'interrupteur de puissance 20 peut par exemple être intégré avec un transformateur 30 adapté à convertir la puissance électrique fournie par les alternateurs de l'aéronef en une puissance électrique utilisable par les moteurs électriques des actionneurs 3.

Comme indiqué par les pointillés sur la figure 1, l'interrupteur de puissance 20, la logique de commande 21 et le transformateur 30 forment ici un premier boîtier, tandis que le module de commande de l'actionneur 8 et le module de puissance 6 forment un second boîtier séparé du premier boîtier.

L'invention n'est pas limitée à ce qui vient d'être décrit, mais bien au contraire englobe toute variante entrant dans le cadre défini par les revendications.

En particulier, bien que l'on ait illustré l'interrupteur de puissance comme étant placé sur la ligne de puissance en amont du module de puissance, l'interrupteur pourra être placé en aval du module de puissance.

## Revendications

1. Dispositif de protection contre les freinages intempestifs spécialement adapté à un frein électromécanique comprenant au moins un actionneur (3) ayant un poussoir (5) apte à être déplacé au moyen d'un moteur électrique commandé par un module de commande (8) pour presser de façon commandée une pile de disques (2), **caractérisé en ce que** le dispositif comporte un interrupteur de puissance (20) disposé sur une ligne de puissance alimentant le moteur électrique de l'actionneur (3), l'interrupteur de puissance étant commandé par une logique de commande (21) qui place par défaut l'interrupteur de puissance dans un état ouvert, et qui ne place l'interrupteur de puissance dans un état fermé qu'en réponse à un signal de confirmation de freinage (23, 13, 14) ne provenant pas du module de commande de l'actionneur (8) et indépendant de celui-ci.

2. Dispositif selon la revendication 1, **caractérisé en ce que** l'interrupteur de puissance (20) et sa logique de commande (21) sont physiquement séparés du module de commande de l'actionneur.

3. Dispositif selon la revendication 2, **caractérisé en ce que** l'interrupteur de puissance (20) et sa logique de commande (21) sont intégrés dans un équipement (30, 20, 21) distinct d'un équipement intégrant le module de commande (8).

4. Dispositif selon la revendication 3, **caractérisé en ce que** le signal de confirmation de freinage est un signal de freinage actif (23) provenant d'un calculateur de freinage (9) fournissant par ailleurs une consigne de freinage (12) au module de commande de l'actionneur (8).

5. Dispositif selon la revendication 1, **caractérisé en ce que** le signal de confirmation de freinage est un signal de pédale (13) provenant d'une pédale de frein actionné par le pilote.

6. Dispositif selon la revendication 1, **caractérisé en ce que** le signal de confirmation de freinage est un signal de parc (14) provenant d'un sélecteur de parc (11).

7. Dispositif selon la revendication 1, **caractérisé en ce que** la logique de commande (21) comporte une temporisation (T1) pour, lorsque le signal de confirmation (23, 13, 14) n'est plus présent, retarder un retour de l'interrupteur de puissance (20) vers l'état ouvert.

## Claims

1. Apparatus for preventing untimely braking, which apparatus is specially adapted to an electromechanical brake including at least one actuator (3) having a pusher (5) suitable for being moved by means of an electric motor controlled by a control module (8) so as to press a stack of disks (2) in controlled manner, said apparatus being **characterized in that** the apparatus is provided with a power switch (20) disposed on a power line for powering the electric motor of the actuator (3), the power switch being controlled by a control logic circuit (21) that places the power switch by default in an open state, and that places the power switch in a closed state only in response to a braking confirmation signal (23, 13, 14) coming from the control module of the actuator (8) and independent therefrom.

2. Apparatus according to claim 1, **characterized in that** the power switch (20) and its control logic (21) are physically separated from the control module of the actuator.

3. Apparatus according to claim 2, **characterized in that** the power switch (20) and its control logic circuit (21) are integrated into equipment (30, 20, 21) that is distinct from equipment integrating the control module (8).

4. Apparatus according to claim 3, **characterized in that** the braking confirmation signal is an active braking signal (23) coming from a braking computer (9) that also delivers a braking instruction (12) to the control module of the actuator (8).

5. Apparatus according to claim 1, **characterized in that** the braking confirmation signal is a pedal signal (13) coming from a brake pedal actuated by the pilot.

6. Apparatus according to claim 1, **characterized in that** the braking confirmation signal is a parking signal (14) coming from a parking selector (11).

7. Apparatus according to claim 1, **characterized in that** the control logic circuit (21) includes a time delay (T1) so that, when the confirmation signal (23, 13, 14) is no longer present, it delays the return of the power switch (20) to the open state.

## Patentansprüche

1. Vorrichtung zum Schutz vor ungewollten Bremsungen, die insbesondere für eine elektromechanische Bremse geeignet ist, die mindestens einen Aktuator (3) umfasst, der einen Stößel (5) hat, der dazu geeignet ist, mittels eines Elektromotors verschoben zu werden, der von einem Steuermodul (8) gesteuert wird, um auf gesteuerte Weise auf einen Stapel Scheiben (2) zu drücken, **dadurch gekennzeichnet, dass** die Vorrichtung einen Leistungsschalter (20) umfasst, der in einer Leistungsleitung angeordnet ist, die den Elektromotor des Aktuators (3) speist, wobei der Leistungsschalter von einer Steuerlogik (21) gesteuert wird, die den Leistungsschalter standardmäßig in einen offenen Zustand stellt und die den Leistungsschalter nur in Antwort auf ein Bremsbestätigungssignal (23, 13, 14) in einen geschlossenen Zustand stellt, das nicht aus dem Steuermodul zum Steuern des Aktuators (8) stammt und unabhängig von demselben ist.

2. Vorrichtung nach Anspruch 1, **dadurch gekennzeichnet, dass** der Leistungsschalter (20) und seine Steuerlogik (21) physisch vom Steuermodul zum Steuern des Aktuators getrennt sind.

3. Vorrichtung nach Anspruch 2, **dadurch gekennzeichnet, dass** der Leistungsschalter (20) und seine Steuerlogik (21) in einer Einrichtung (30, 20, 21) integriert sind, die sich von einer Einrichtung, in der das Steuermodul (8) integriert ist, unterscheidet.

4. Vorrichtung nach Anspruch 3, **dadurch gekennzeichnet, dass** das Bremsbestätigungssignal ein aktives Bremssignal (23) ist, das aus einem Bremsrechner (9) stammt, der darüber hinaus einen Bremseinstellwert (12) an das Steuermodul zum Steuern des Aktuators (8) liefert.

5. Vorrichtung nach Anspruch 1, **dadurch gekennzeichnet, dass** das Bremsbestätigungssignal ein Pedalsignal (13) ist, das aus einem Bremspedal stammt, das von dem Piloten betätigt wird.

6. Vorrichtung nach Anspruch 1, **dadurch gekennzeichnet, dass** das Bremsbestätigungssignal ein Parksignal (14) ist, das aus einem Parkwähler (11) stammt.

7. Vorrichtung nach Anspruch 1, **dadurch gekennzeichnet, dass** die Steuerlogik (21) eine Verzögerung (T1) umfasst, um, wenn das Bestätigungssignal (23, 13, 14) nicht mehr vorhanden ist, eine Rückkehr des Leistungsschalters (20) in den offenen Zustand zu verzögern.
